(19) Europäisches Patentamt
European Patent Office
Office européen des brevets

(11) **EP 3 586 215 B1**

(12) **FASCICULE DE BREVET EUROPEEN**

(45) Date de publication et mention
de la délivrance du brevet:
**13.12.2023   Bulletin 2023/50**

(21) Numéro de dépôt: **18718600.2**

(22) Date de dépôt: **29.03.2018**

(51) Classification Internationale des Brevets (IPC):
**G06F 3/0354** *(2013.01)*   **G06F 3/04883** *(2022.01)*
**B06B 1/06** *(2006.01)*

(52) Classification Coopérative des Brevets (CPC):
**G06F 3/016; G06F 3/03547; G06F 3/04883;**
**B06B 1/06**

(86) Numéro de dépôt international:
**PCT/FR2018/050781**

(87) Numéro de publication internationale:
**WO 2018/178582 (04.10.2018 Gazette 2018/40)**

(54) **INTERFACE OFFRANT UNE MODULATION DE FRICTION LOCALISÉE PAR LUBRIFICATION ACOUSTIQUE**

SCHNITTSTELLE ZUR BEREITSTELLUNG LOKALISIERTER REIBUNGSMODULATION DURCH AKUSTISCHE SCHMIERUNG

INTERFACE PROVIDING LOCALISED FRICTION MODULATION BY ACOUSTIC LUBRICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **31.03.2017   FR 1752794**

(43) Date de publication de la demande:
**01.01.2020   Bulletin 2020/01**

(73) Titulaire: **Commissariat à l'Energie Atomique et
aux Energies
Alternatives
75015 Paris (FR)**

(72) Inventeur: **HUDIN, Charles
75013 Paris (FR)**

(74) Mandataire: **Brevalex
Tour Trinity
1 B Place de la Défense
92400 Courbevoie (FR)**

(56) Documents cités:
**EP-A1- 1 956 466        EP-A1- 2 682 843
EP-B1- 1 805 585        US-A1- 2014 062 910
US-A1- 2015 169 060**

• **MEYER DAVID J ET AL: "Dynamics of ultrasonic
and electrostatic friction modulation for
rendering texture on haptic surfaces", 2014 IEEE
HAPTICS SYMPOSIUM (HAPTICS), IEEE, 23
février 2014 (2014-02-23), pages 63-67,
XP032582631, DOI:
10.1109/HAPTICS.2014.6775434**
• **GHENNA SOFIANE ET AL: "Preliminary design
of a multi-touch ultrasonic tactile stimulator",
2015 IEEE WORLD HAPTICS CONFERENCE
(WHC), IEEE, 22 juin 2015 (2015-06-22), pages
31-36, XP033188591, DOI:
10.1109/WHC.2015.7177687**

**Description**

**DOMAINE TECHNIQUE ET ÉTAT DE LA TECHNIQUE ANTÉRIEURE**

La présente invention se rapporte à un procédé de restitution d'une sensation de texture au moyen d'une interface tactile offrant une modulation de friction localisée par lubrification acoustique.

Une interface tactile comporte une surface destinée à être explorée par un ou plusieurs doigts. Il peut s'agir par exemple de la surface d'un écran. On cherche à pouvoir restituer des sensations de textures lors de l'exploration de la surface, alors que la surface est lisse.

La sensation de texture peut être obtenue grâce à une technique utilisant l'électro-vibration qui augmente et module temporellement le coefficient de friction entre le doigt et la surface en créant une force électrostatique d'attraction entre le doigt et une électrode protégée par une mince couche transparente de matériau isolant. En mettant en oeuvre une matrice d'électrodes, on peut obtenir une variation spatiale de la friction et donc une exploration multidigitale, également désignée « multitouch » de la surface. Pour obtenir un effet notable, cette approche par électro-vibration nécessite toutefois d'appliquer de hautes tensions, par exemple supérieures à 100V à des électrodes isolées du doigt par seulement quelques microns de matériau isolant électrique. Cette technique pose donc des problèmes de sécurité d'utilisation et nécessite en outre, pour que la différence de potentielle entre le doigt et la plaque soit contrôlable, de maintenir une masse commune et donc un contact électrique entre la source de tension de l'électrode et l'utilisateur.

Une autre technique de modulation temporelle du coefficient de friction apparent entre le doigt et la surface, corrélée au mouvement d'un doigt, met en oeuvre la lubrification acoustique, qui est générée en faisant vibrer la surface à une fréquence ultrasonore. Cette vibration, d'une amplitude de l'ordre du micron, engendre un contact intermittent entre le doigt et la surface qui se traduit par une diminution significative du coefficient de friction apparent. En modulant cet effet selon la position sur la surface, on donne l'illusion d'une variation spatiale de la friction et donc d'une texture. Cette technique est décrite par exemple dans le document M. Wiertlewski, D. Leonardis, D. J. Meyer, M. A. Peshkin, and J. E. Colgate, "A high-fidelity surface-haptic device for texture rendering on bore finger," in International Conférence on Human Haptic Sensing and Touch Enabled Computer Applications, 2014, pp. 241-248*, et le document E. Vezzoli, T. Sednaoui, M. Amberg, F. Giraud, and B. Lemaire-Semail, "Texture Rendering Strategies with a High Fidelity Capacitive Visuat-Haptic Friction Control Device," at the Eurohaptics 2016, London, 2016, vol. 9774.

Comme cela a été indiqué ci-dessus, la sensation de texture est obtenue par une modulation temporelle du coefficient de friction apparent corrélée au mouvement d'un doigt et non par une variation spatiale de la friction. Il en résulte que plusieurs doigts en contact avec la surface sont soumis à un même stimulus, et donc ressentent sensiblement la même texture simulée.

Le document EP1 956 466 décrit une interface tactile comportant une surface et une matrice d'actionneurs piézoélectriques en contact avec la surface, tous les actionneurs reçoivent le même signal de sorte à exciter un mode propre de la plaque. Tous les doigts ressentent la même texture.

Des méthodes utilisent le contrôle en amplitude et/ou en phase de plusieurs modes propres de la plaque pour pouvoir simuler des textures différentes pour plusieurs doigts. Cependant aucune méthode n'a permis pour le moment de réaliser une interface offrant apte à générer une modulation localisée du coefficient de frottement.

Le document Meyer David J. et al : "Dynamics of Ultrasonic and Electrostatic Friction Modulation for Rendering Texture on Haptic Surfaces" 2014 IEEE Haptics Symposium, 23 février 2014, pages 63-67, décrit des interfaces haptiques modulant le friction entre la surface et l'extrémité d'un doigt, afin de créer une perception tactile des caractéristiques de la surface ou de sa texture. EP 2 682 843 divulgue un procédé et appareil pour la localisation d'une rétroaction haptique.

**EXPOSÉ DE L'INVENTION**

C'est par conséquent un but de la présente divulgation d'offrir une interface apte à moduler localement le coefficient de frottement, de sorte que, par exemple lorsque l'interface est mise en oeuvre dans une interface tactile et la surface tactile est explorée par au moins deux doigts simultanément, des coefficients de frottement apparents différents puissent être générés pour chaque doigt, et ainsi permettre de simuler une sensation de texture différente pour chaque doigt.

Le but précédemment énoncé est atteint par un procédé de restitution d'une sensation de texture au moyen d'une interface tactile selon la revendication 1.

Le but précédemment énoncé est aussi atteint par une interface mettant en oeuvre la lubrification acoustique qui ne fait pas partie de la présente invention mais ne représente qu'un exemple illustratif.

Cette interface comporte une surface et au moins un actionneur apte à mettre en vibration ladite surface. Ledit actionneur est excité par un signal harmonique dans lequel le signal porteur est à une fréquence dite non radiative. En mettant en oeuvre un signal porteur à une fréquence non radiative, les vibrations générées par l'actionneur restent confinées sensiblement à la zone couverte par l'actionneur. Seules des ondes de vibration évanescentes sont produites au-delà de la zone couverte par l'actionneur.

Ainsi lorsque la surface est une surface tactile explorée par deux doigts, le doigt situé sur la zone couverte par l'actionneur ressent un coefficient de friction apparent modulable et le doigt situé en dehors de cette zone, ressent le coefficient de friction réel entre le doigt et le matériau de la surface tactile.

Dans le cas où plusieurs actionneurs sont mis en oeuvre, l'interface est telle que chaque actionneur peut être excité par un signal d'excitation différent. Le signal porteur est de préférence le même pour tous les actionneurs.

Dans un exemple avantageux, le signal de pilotage peut avantageusement être modulé. Selon l'invention, chaque signal de pilotage peut être modulé séparément. Il est alors possible de générer une lubrification acoustique au niveau de chaque actionneur qui diffère d'un actionneur à l'autre. Ainsi chaque doigt peut être stimulé différemment et ressentir une texture différente.

En effet certaines fréquences, dites fréquences non radiatives, ont été identifiées, pour lesquelles très peu d'énergie se propageait en dehors de la surface de l'actionneur. Or généralement on évite de se placer à ces fréquences qui peuvent être identifiées à des fréquences de coupure et on choisit les dimensions des actionneurs afin d'être en dehors de ces fréquences d'actionnement. Contrairement à la pratique générale, l'inventeur utilise ces fréquences pour générer un signal de pilotage et obtient une lubrification acoustique localisée, ce qui n'avait pas encore été obtenu.

En choisissant une de ces fréquences radiatives comme fréquence du signal porteur, il est possible de réduire le coefficient de friction apparent sur une zone confinée sensiblement à la surface couverte par l'actionneur, et donc de ne mettre en vibration que la zone de la surface tactile couverte par l'actionneur. En mettant en oeuvre plusieurs actionneurs, des stimulations différentes pour deux doigts peuvent être générés. Avantageusement le signal de pilotage peut être modulé, permettant de moduler temporellement la variation du coefficient de friction apparent.

En répartissant des actionneurs sous toute la surface destinée à être explorée tactilement, il est possible de simuler des sensations de textures localisées sur toute la surface tactile.

Les actionneurs sont par exemple des pastilles en matériau piézoélectrique collées sur la surface de la plaque à l'opposé de la surface destinée à être explorée tactilement.

De manière préférée, la ou les fréquences non radiatives sont choisies en dehors du domaine de fréquence audible de sorte à offrir une interface tactile à fonctionnement silencieux.

La présente divulgation inclut également une interface comportant une première surface et au moins un actionneur destiné à mettre en vibration ladite surface dans une direction transversale à la surface, une unité de commande apte à générer un signal de pilotage, ledit signal de pilotage étant un signal harmonique comportant un signal porteur à une fréquence non radiative.

Dans un exemple de réalisation, l'interface comporte n actionneurs destinés à mettre en vibration ladite première surface, n étant un entier > 1, l'unité de commande étant apte à générer un signal de pilotage pour chaque actionneur, chaque signal de pilotage étant un signal harmonique comportant un signal porteur à une fréquence non radiative.

De préférence, le signal porteur est identique pour tous les signaux de pilotage.

De manière avantageuse, chaque fréquence non radiative est telle que l'amplitude des vibrations générées par l'actionneur dans une zone de la surface en dehors d'une zone de la surface couverte par l'actionneur est inférieure à l'amplitude des vibrations générées par l'actionneur dans la zone de la surface couverte par l'actionneur d'au moins 10dB.

Dans un exemple de réalisation, chaque fréquence non radiative est supérieure ou égale à 1 kHz

Selon une caractéristique additionnelle, le ou les signaux de pilotage ($s_i$) comportent un signal de modulation, ayant par exemple une fréquence de modulation de 1 Hertz à plusieurs centaines de Hertz.

Dans un exemple de réalisation, l'interface peut comporter une plaque portant la première surface. Le ou les actionneurs sont des actionneurs piézoélectriques solidaires, par exemple par collage, d'une deuxième surface de la plaque opposée à la première surface, de sorte à mettre en vibration la première surface.

L'interface peut avantageusement comporter des moyens de détection de la présence d'un ou plusieurs objets ou d'un ou plusieurs membres tactiles d'un utilisateur sur la première surface et/ou de l'effort exercé par le ou les objets ou le membre ou les membres tactiles sur la première surface. Par exemple, les moyens de détection mettent en oeuvre le ou les actionneurs piézoélectrique et sont configurés pour mesurer une variation d'impédance électrique du ou des actionneurs piézoélectriques.

Dans un exemple de réalisation, le ou les actionneurs recouvrent sensiblement toute la deuxième surface.

L'interface peut être une interface tactile, dans laquelle la première surface est une surface tactile destinée à être explorée par un ou plusieurs membres tactiles d'un utilisateur.

La plaque peut être transparente et les actionneurs peuvent également être transparents de sorte à permettre à un utilisateur de voir un écran situé sous la plaque.

La présente divulgation a également pour objet un dispositif de micromanipulation d'objets comportant une interface selon l'invention et des moyens de génération de vibrations dans le plan de la surface.

La présente invention a pour objet un procédé de restitution d'une sensation de texture au moyen d'une interface tactile comportant une surface selon la revendication 1.

Dans le cas d'une interface comportant plusieurs actionneurs, le procédé peut générer plusieurs signaux de pilotage pour exciter séparément plusieurs actionneurs, lesdits signaux de pilotage comportant chacun un signal harmonique comprenant un signal porteur à une fréquence non radiative et l'envoi de ce signal de pilotage à l'actionneur de sorte à générer une modification d'un coefficient de friction de la zone de la surface tactile couverte par l'actionneur.

Tous les signaux de pilotage ont avantageusement le même signal porteur.

Au moins une partie des signaux de pilotage peuvent comporter un signal modulé.

## BRÈVE DESCRIPTION DES DESSINS

La présente invention sera mieux comprise sur la base de la description qui va suivre et des dessins en annexe sur lesquels:

- la figure 1 est une vue de côté représentée schématiquement d'une interface tactile selon un exemple de la présente divulgation,
- la figure 2 est une vue de dessus de de l'interface de la figure 1,
- la figure 3 est une représentation de la réponse d'un actionneur piézoélectrique en fonction de la fréquence du signal d'excitation,
- la figure 4A est une vue de côté représentée schématiquement d'une interface tactile selon un autre exemple de la présente divulgation comportant deux actionneurs,
- la figure 4B est une vue de dessus de de l'interface de la figure 4A,
- la figure 5 est une représentation graphique de l'amplitude des vibrations en nm d'une surface d'une interface tactile selon la présente divulgation en fonction de la fréquence en kHz, comportant deux actionneurs, lors d'une excitation des deux actionneurs,
- la figure 6 est une représentation graphique du déplacement mesuré en nm en fonction de la position sur la surface tactile,
- la figure 7 montre des représentations graphiques des déplacements en nm au niveau des actionneurs a1 et a2 et dans une zone de la surface tactile en dehors des actionneurs a1 et a2, en fonction du temps en ms,
- la figure 8 montre deux représentations graphiques l'une représentant la position d'un doigt sur la surface tactile fonction du temps en s et l'autre la force de friction en Newton vue par le doigt en fonction du temps en s,
- les figures 9A à 9D sont des représentations des déplacement au centre d'un actionneur excités par deux signaux de pilotage ayant des porteuses différentes ayant les fréquences f1, f2, f3, f4 de la figure 3 respectivement.

## EXPOSÉ DÉTAILLÉ DE MODES DE RÉALISATION PARTICULIERS

La description qui va suivre décrit en détail l'invention dans une application aux interfaces tactiles. Mais l'invention peut avoir d'autres applications qui seront décrites ci-dessous.

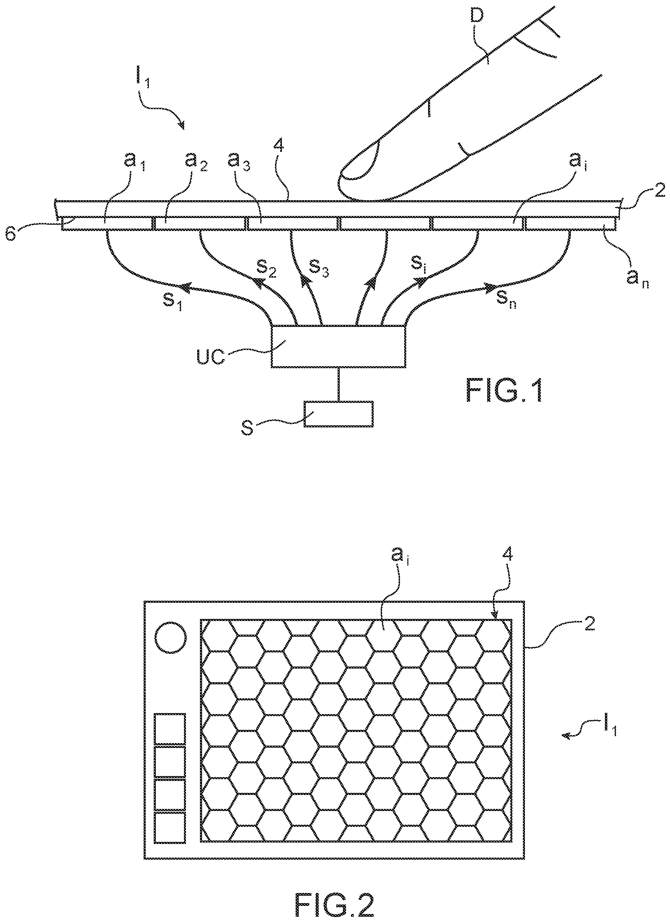

Sur les figures 1 et 2, on peut voir représenté schématiquement d'un exemple d'interface tactile I1 selon la présente divulgation comportant une plaque 2 comprenant une première surface 4 et une deuxième face 6 opposée à la première face.

La première surface 4 est destinée à être explorée tactilement, par exemple par les doigts d'une utilisatrice ou d'un utilisateur. La première surface 4 est désignée surface tactile.

Dans l'exemple représenté, la surface tactile est plane, ainsi que la plaque mais la présente invention s'applique à des surfaces tactiles courbes et à des plaques courbes. Le terme « plaque » n'est pas limité à un élément plan mais à tout élément offrant une grande longueur par rapport à son épaisseur et pouvant être plan au moins en partie et/ou présenté un ou plusieurs courbures.

Dans la présente demande, on considère, à des fins de simplicité, que la surface tactile 4 est destinée à être touchée par la pulpe d'un doigt D ou de plusieurs doigts, mais la surface de l'interface selon la présente divulgation est apte à appliquer une stimulation à toute partie du corps de l'utilisateur ou de l'utilisatrice sensible au sens du toucher, désignée membres tactiles.

Dans l'exemple représenté, l'interface comporte plusieurs d'actionneurs ai, avec i un entier $1 \leq i \leq n$, en contact avec la deuxième surface 6 de sorte que, lorsqu'un ou des actionneurs est ou sont excités, ils transmettent des vibrations à la plaque 2. Une interface tactile avec un seul actionneur entre dans le cadre de la présente divulgation.

Les actionneurs sont par exemple des actionneurs piézoélectriques comportant chacun une pastille en céramique piézoélectrique, tel que le PZT (Titano-Zirconate de Plomb) ou l'AIN (Nitrure d'Aluminium) fixés sur la deuxième surface 6, par exemple par collage ou par dépôt en couches minces. En variante, les actionneurs pourraient être magnétostrictifs.

Les actionneurs peuvent couvrir toute la deuxième surface 6 ou n'être disposés qu'à certaines positions sur la deuxième face 6.

La plaque peut être réalisée en plastique, métal, verre, céramique.

Dans le cas d'une interface tactile, l'épaisseur de la plaque est de préférence inférieure à 1 mm afin d'atteindre des amplitudes de déplacement de la plaque suffisantes en limitant la consommation d'énergie. Dans d'autres applications, l'épaisseur peut être augmentée ou réduite.

De préférence, l'épaisseur de la plaque est choisie faible par rapport aux dimensions de l'actionneur dans le plan. De manière préférée, la longueur ou le diamètre de l'actionneur est égal à au moins deux fois l'épaisseur de la plaque.

De préférence les actionneurs ont une forme circulaire, par exemple une forme de disque ou une forme d'anneau. Comme cela sera expliqué dans la suite de la description les actionneurs sont excités à des fréquences non radiatives. Or l'existence de fréquences non radiatives s'explique par l'interférence destructive des ondes produites sur l'ensemble du pourtour de l'actionneur. Lors que l'actionneur est circulaire, toutes les ondes peuvent s'annuler parfaitement. Si l'actionneur présente une forme non circulaire, on ne peut obtenir, à une fréquence donnée, l'extinction totale des ondes dans toutes les directions jamais. Il existe néanmoins toujours des fréquences de moindre amplitude de rayonnement. Quelle que soit la forme de l'actionneur on peut déterminer un ou des fréquences non radiatives.

Une source de vibration pilotée par un signal harmonique produit à la fois des ondes propagatives et des ondes évanescentes. Du fait de la géométrie de l'actionneur, on observe une interférence destructive des ondes propagatives à certaines fréquences que nous qualifions de « non rayonnantes » ou de « non radiatives ». De telles sources non rayonnantes sont décrites dans d'autre domaine de physique des ondes, en acoustique en électromagnétisme notamment. L'inventeur a pensé à utiliser ces ondes pour moduler localement le coefficient de frottement dans une interface haptique

Par ailleurs, on peut choisir de préférence des formes d'actionneur se rapprochant d'une forme circulaire, telle que la forme hexagonale qui présente en outre l'avantage de permettre de paver toute la surface 6.

Dans l'exemple représenté, les pastilles sont de forme hexagonale, ce qui permet de paver toute la deuxième surface 6 tout en se rapprochant de la forme du disque. Toute autre forme d'actionneur peut être envisageable, par exemple une forme carrée.

La plaque peut avantageusement être transparente, par exemple en verre, ainsi que les actionneurs pour pouvoir être disposé sur un écran.

Dans d'autres applications, on peut envisager d'équiper par exemple la coque arrière d'un téléphone portable d'actionneurs pour former une interface tactile et interagir avec le contenu numérique du téléphone. Le pavé tactile d'un ordinateur portable pourrait également être formé par une interface tactile selon la présente divulgation.

Les actionneurs comportent chacun deux électrodes (non représentées), chacune en contact avec une face de la pastille et permettant de leur appliquer une différence de potentiel d'excitation pour générer l'effet piézoélectrique. Les électrodes sont également avantageusement transparentes pour une interface tactile appliquée à un écran.

Chaque actionneur est relié à une source d'alimentation S. Par exemple au moins deux actionneurs peuvent être pilotés par des signaux d'excitation distincts. Tous les actionneurs peuvent être connectés à la source d'alimentation de sorte à être excitables chacun par un signal distinct des signaux appliqués aux autres actionneurs. Par exemple on peut envisager une connexion filaire dédiée pour chaque actionneur.

Dans un mode de fonctionnement, on peut ne pas activer tous les actionneurs en même temps. On peut alors utiliser un nombre réduit de sources de pilotage différentes, par exemple cinq, chaque source produisant une stimulation souhaitée. Chaque actionneur pourrait être connecté à l'une des sources de pilotage en fonction de la stimulation souhaitée à l'emplacement de l'actionneur.

L'interface tactile comporte également une unité de commande UC qui contrôle l'envoi des signaux à chacun des actionneurs et le signal envoyé à chaque actionneur.

L'unité de commande UC comporte un module de génération de signaux de pilotage de chacun des actionneurs.

Selon la présente divulgation, chaque actionneur ai est piloté par un signal harmonique $s_i$, qui peut s'écrire sous la forme générale suivante :

$$s_i(t) = M_i \times P(t)$$

i est un entier > 1 désignant l'actionneur auquel il est destiné.

P(t) est une porteuse ou un signal porteur de fréquence élevée dite non-radiative.

Dans ce mode de réalisation, la porteuse est identique pour tous les actionneurs et le signal de modulation peut être identique ou différent d'un actionneur à l'autre.

Chaque porteuse peut s'écrire :

$$\mathrm{P(t)} = \sin\left(2\pi f_p t\right)$$

Avec $f_p$ est une fréquence non radiative de 1 Hz à plusieurs centaines de kHz dans le cas d'une interface tactile, voire un à plusieurs MHz pour d'autres applications.

$M_i$ est adapté à l'actionneur ai. Il peut s'agir d'une constante. Préférentiellement il peut s'agir d'un signal de modulation basse fréquence pour l'actionneur i et s'écrit $M_i(t)$.

Le signal de modulation Mi(t) a un contenu spectral dans la gamme de perception tactile, du signal continu à une fréquence inférieure à 1 kHz, par exemple de l'ordre de 50 Hz. Il peut donc s'agir d'une sinusoïde, d'un créneau, etc.

On entend dans la présente demande par « fréquence non radiative », une fréquence d'excitation d'un actionneur pour laquelle une faible partie de l'énergie transmise à la plaque se propage à l'extérieur de la zone couverte par l'actionneur. Les ondes vibratoires en dehors de la zone couverte par l'actionneur sont principalement des ondes évanescentes. Par exemple, on considère que la fréquence du signal porteur est une fréquence non radiative, lorsque l'amplitude de déplacement ou de vibration en dehors de la zone couverte par l'actionneur est inférieure à l'amplitude de déplacement ou de vibration dans la zone couverte par l'actionneur d'au moins 10dB, très avantageusement inférieure d'au moins 80 dB et de manière préférentielle inférieure d'au moins 100 dB.

La zone couverte par l'actionneur est la zone de la surface tactile située au droit ou à l'aplomb de l'actionneur et ayant les mêmes dimensions que celle de l'actionneur. Dans le cas d'un actionneur en forme de disque, la zone couverte par l'actionneur est une zone de la surface tactile en forme de disque de même diamètre que l'actionneur et à l'aplomb de celui-ci.

L'inventeur a déterminé qu'il existait de telles fréquences d'excitation des actionneurs.

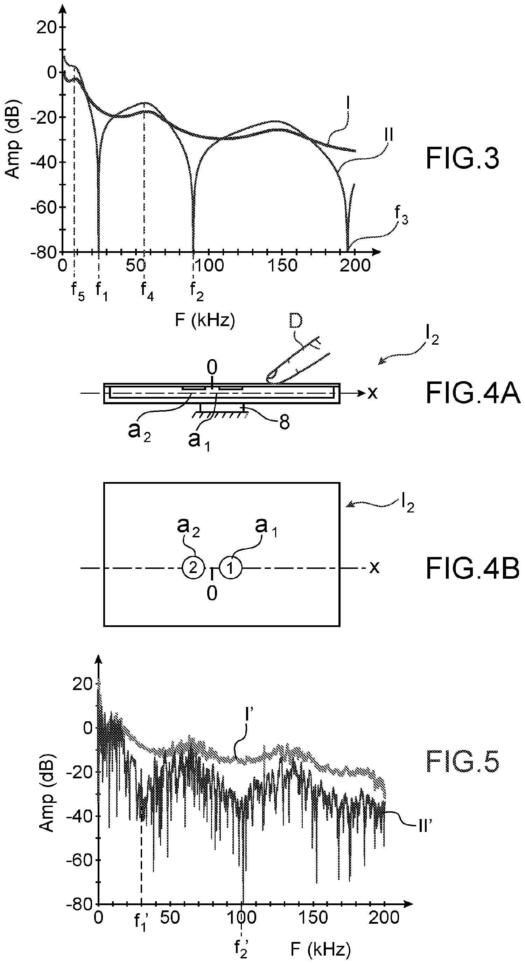

Sur la figure 3, on peut voir la variation d'amplitude Amp en dB de la vibration au centre d'un actionneur ai (courbe I) et l'amplitude d'une onde de propagation à l'extérieur de l'actionneur (courbe II) en fonction de la fréquence F en kHz. Ces courbes sont obtenues par calcul. On observe qu'à certaines fréquences f1, f2, f3 l'amplitude de l'onde de propagation à l'extérieur de l'actionneur est annulée. Dans l'exemple représenté, f1 = 25 kHz, f2 = 90 kHz et f3 = 195 kHz. En choisissant l'une de ces fréquences pour exciter l'actionneur, la vibration transmise à la plaque se limite sensiblement à la zone couverte par l'actionneur. Ces fréquences sont les fréquences non radiatives.

Les valeurs des fréquences non radiatives dépendent, entre autre :

- des épaisseurs de la plaque et de l'actionneur,
- des dimensions de l'actionneur, telles que son rayon, sa longueur selon sa forme,
- des élasticités (module d'Young) de la plaque et de l'actionneur,
- des coefficients de poisson de la plaque et de l'actionneur,
- des masses volumiques de la plaque et de l'actionneur.

Lorsque l'actionneur a une épaisseur faible devant celle de la plaque, seule sa longueur a une influence sensible, ses propriétés mécaniques et son épaisseur sont alors sans influence notable.

Il est à noter que les dimensions de la plaque n'ont pas d'influence sur les valeurs de la ou des fréquences radiatives.

Grâce à l'invention, il est possible de générer des motifs de friction ou de texture différents pour chaque actionneur. Ainsi on peut affecter à chaque zone couverte par un actionneur une texture donnée à reproduire. Il n'est alors pas nécessaire d'avoir des moyens de détecter la présence du ou des doigts. Cependant cela implique un actionnement permanent de tous les actionneurs.

Dans un autre mode de réalisation, un ou plusieurs signaux de pilotage si(t) pourraient comporter des porteuses différentes.

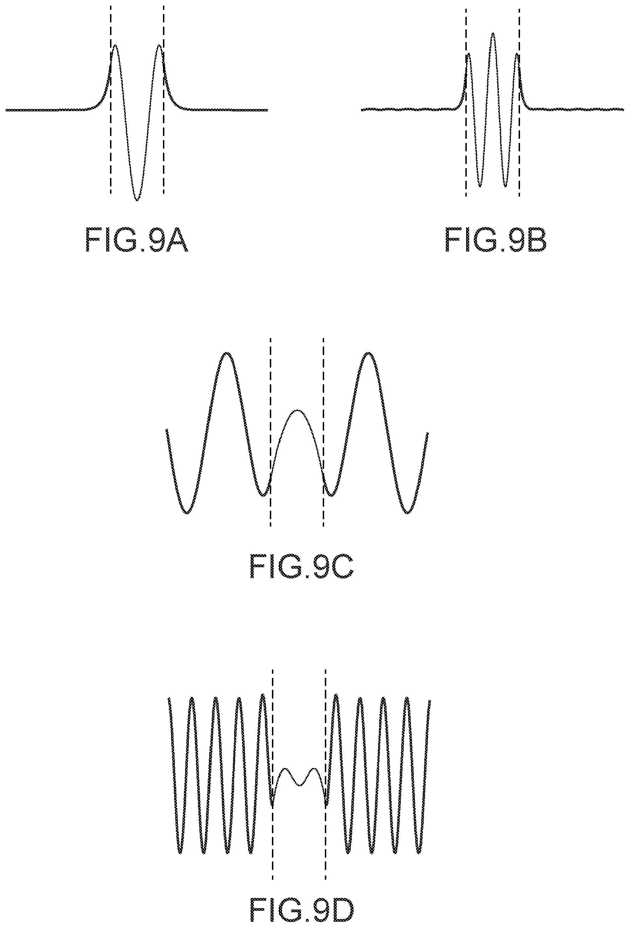

Par exemple sur les figures 9A et 9B, on peut voir les profils d'amplitude de vibration au centre d'un actionneur pour deux fréquences non radiatives différentes, i.e. commandé par deux signaux ayant des signaux porteurs différents. Pour la figure 9A, la porteuse à la fréquence non radiative f1 (figure 3) d'environ 25 kHz et pour la figure 9B, la porteuse a une fréquence non radiative f2 d'environ 90 kHz. La surface de l'actionneur est délimitée entre les deux traits verticaux en pointillés. On constate que le profil de déplacement au centre de l'actionneur varie avec la fréquence porteuse. En outre, on constate qu'en dehors de la zone couverte par l'actionneur, ce sont principalement des ondes évanescentes qui se propagent.

Sur les figures 9C et 9B, on peut voir les profils d'amplitude de la plaque au niveau de la surface couverte par l'actionneur et de la surface autour de l'actionneur à des fréquences radiatives f5 d'environ 10 kHz et f4 d'environ 60 kHz (figure 3), on constate une amplitude de vibrations autour de l'actionneur comparable, voire supérieure, à celles au centre de l'actionneur.

Les figures 9A à 9D illustrent l'efficacité de localisation des vibrations obtenues grâce à l'invention en sélectionnant des porteuses aux fréquences non radiatives.

En choisissant des signaux de pilotage avec des porteuses différentes, il est possible de contrôler spatialement le champ de déplacement dans la zone couverte par l'actionneur.

Dans une variante, il est envisageable qu'un même signal de pilotage comporte plusieurs porteuses, chacune à une fréquence non radiative. Le signal est alors une combinaison linéaire de porteuse. Il peut s'écrire par exemple dans le cas de deux porteuses :

$$s_i(t) = M1_i \times \sin(2\pi f_{p1}t) + M2_i \times \sin(2\pi f_{p2}t)$$

Le champ de déplacement au centre de l'actionneur est alors une combinaison des champs de déplacement générés séparément par chaque porteuse.

De manière avantageuse, l'interface comporte des moyens 8 (figure 4A) pour détecter la position du ou des doigts et/ou l'effort exercée par celui-ci ou ceux-ci sur la surface. Ainsi il est possible de moduler la stimulation en fonction de la position des doigts ou des efforts exercés sur la surface. La modulation peut n'être activée que dans les zones susceptibles d'être touchées, en résulte alors une réduction de l'énergie consommée pour faire fonctionner l'interface tactile. En outre, le suivi du déplacement du doigt permet avantageusement de donner l'illusion d'une texture plus fine que la dimension de l'actionneur lui-même. Si l'actionneur est suffisamment petit pour qu'un seul doigt au maximum puisse être au-dessus, l'illusion de texture est conservée sans avoir mettre en oeuvre de moyens pour détecter la présence du doigt. La mesure de la force permet de simuler une raideur.

Selon un exemple de réalisation, la détection de la présence d'un doigt peut être obtenue par des moyens capacitifs. Le doigt et l'électrode supérieure de l'actionneur forment les deux électrodes d'un condensateur plan séparé par une plaque isolante intermédiaire. En outre il est possible d'utiliser ces moyens pour suivre le déplacement des doigts.

Selon un autre exemple, la détection de la présence d'un doigt peut être réalisée en mesurant une variation d'impédance électrique du matériau piézoélectrique de l'actionneur. Cette détection est peu précise mais est suffisante pour mettre en oeuvre la présente invention.

Sur les figures 4A et 4B, on peut voir des vues de côté et de dessus respectivement d'un exemple d'interface tactile I2 à deux actionneurs piézoélectriques a1 et a2 disposés l'un à côté de l'autre.

Sur la figure 5, on peut voir la variation mesurée du rapport amplitude amp de vibration/tension appliquée en fonction de la fréquence F en kHz au centre d'un des actionneurs (courbe I') et à un point quelconque de la plaque en dehors de la zone couverte par l'actionneur.

On constate à nouveau l'existence des fréquences non radiatives f1', f2' à environ 30 kHz et 100 kHz.

En choisissant comme une fréquence non radiative pour le signal porteur, seule la surface de la plaque couverte par l'actionneur est mise en vibration. On peut alors exciter deux actionneurs indépendamment l'un de l'autre et générer des stimulations différentes sur la même surface.

De préférence, on choisit la fréquence non radiative qui génère le déplacement d'amplitude la plus élevée. Dans le cas présent, il s'agit de la fréquence f1. Il sera compris que les autres fréquences peuvent être choisies en fonction des applications.

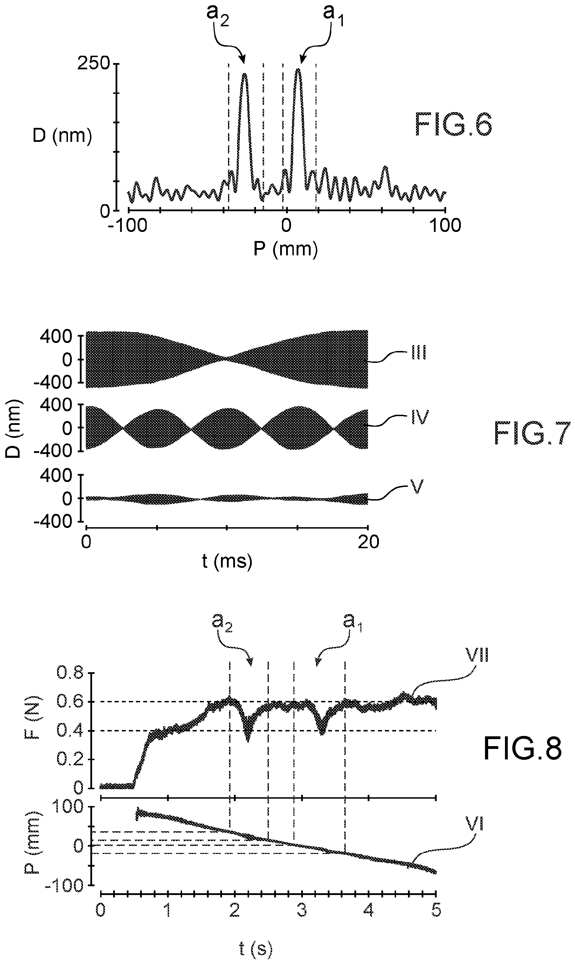

Sur la figure 6, on peut voir le déplacement D mesuré de la plaque en nm en fonction de la position P sur la plaque en mm, lorsque les deux actionneurs a1 et a2 sont excités. La fréquence de la porteuse $f_p$ est égale à 33 kHz, la fréquence de modulation de l'actionneur a1 est égale à 25 Hz et la fréquence de modulation de l'actionneur a 2 est égale à 100 Hz. La plaque a une surface de $148 \times 200$ mm$^2$ et le déplacement est mesuré tous les 2 mm.

On constate que le déplacement est sensiblement plus important au niveau des deux actionneurs, environ 250 nm alors que le déplacement est inférieur à 50 nm sur le reste de la plaque. Les traits en pointillés délimitent l'extension axiale des actionneurs le long de l'axe X (cf. fig. 4A et 4B). On constate que les déplacements maximaux pour les deux actionneurs sont sensiblement les mêmes malgré des fréquences de modulation différentes.

Sur la figure 7, on peut voir les variations de déplacement en nm au centre des actionneurs a1 (courbe III) et a2 (courbe IV) en fonction du temps t en ms. On constate que le déplacement est modulé séparément pour les deux actionneurs, la modulation de l'actionneur a2 ayant lieu à une fréquence plus élevée (100 Hz) que celle de l'actionneur a1 (25Hz). La courbe V montre la variation de déplacement de la zone entre les deux actionneurs, on constate que le déplacement est modulé mais que son amplitude est très faible comparativement à celles des déplacements au niveau des actionneurs a1 et a2.

Sur la figure 8, on peut voir une courbe VI représentant la position d'un doigt sur la surface de la plaque le long de l'axe X en mm en fonction du temps en seconde. La position 0 est située au milieu des deux actionneurs, et une courbe VII représentant la force de friction en Newton s'appliquant au doigt. On constate une diminution localisée sensible de la force de friction sur les zones couvertes par les actionneurs. La force de friction varie de 0,6 N à 0,4 N lorsque le doigt passe sur un actionneur. L'actionneur a1 est modulé à 25 Hz et l'actionneur a2 est modulé à 200Hz.

Ces courbes illustrent l'efficacité de l'invention. Il est donc possible de déplacer dans une direction horsplan à haute fréquence, différentes zones de la surface de manière distincte les unes des autres et donc de stimuler plusieurs doigts de manière séparée.

Grâce à la présente invention, il est possible de contrôler localement, l'amplitude et donc la friction d'un doigt sur une surface, au contraire des interfaces de l'état de la technique dans lesquelles la propagation des ondes dans la plaque entraîne une variation du coefficient de friction sensiblement uniforme sur l'ensemble de la surface tactile.

L'homme du métier peut déterminer les fréquences non radiatives pour une interface donnée, par le calcul ou expérimentalement, et établir les signaux de pilotage adaptés à une lubrification acoustique localisée selon l'invention.

Puisque la bande de fréquence non radiative s'étend sur plusieurs kHz, une modulation à basse fréquence, par exemple à quelques dizaines de kHz dans la gamme de sensibilité tactile ne perturbe la localisation de la vibration.

Toute forme de plaque peut être utilisée ainsi que toute forme d'actionneur.

La plaque peut avantageusement avoir une constante de temps d'atténuation faible, avantageusement de l'ordre de la ms voir inférieure à 1 ms, ce qui permet de favoriser encore davantage la localisation de la vibration en amortissant rapidement la fraction d'énergie se propageant en dehors de la zone couverte par l'actionneur.

L'amplitude de vibration au-dessus d'un actionneur est directement proportionnelle à la tension appliquée à l'actionneur, il en résulte que la réduction de friction au-dessus d'un actionneur est directement liée à la valeur de tenson qui lui est appliquée.

L'interface selon la présente divulgation peut être utilisée dans d'autres domaines que celui des interfaces tactiles, par exemple elle peut être utilisée dans le domaine de la micromanipulation par acoustophorèse.

Par exemple on peut coupler une vibration hors-plan localisée obtenue grâce au signal de pilotage tel que décrit ci-dessus de sorte à « suspendre » l'objet à une vibration dans le plan de la plaque afin de déplacer l'objet. On peut ainsi déplacer dans le plan des objets situés dans des zones voulues de plaque. On peut envisager de déplacer des objets de quelques μm à plusieurs cm. La masse déplaçable dépend de l'épaisseur de la plaque, par exemple un objet d'une centaine de grammes peut être déplacé par des vibrations d'une plaque de l'ordre du mm.

La présente invention peut également s'appliquer à la manipulation d'objets dans un fluide, tel que l'eau ou l'air, situé au-dessus de la plaque, selon la technique décrite dans le document « Formation of inverse Chladni patterns in liquids at microscale: roles of acoustic radiation and streaming-induced drag forces » - Microfluid Nanofluid (2017) 21 :50

L'interface selon la présente divulgation peut également être mise en oeuvre dans le domaine de la biologie cellulaire. En effet les vibrations du support sur lequel se développent des cellules influencent leur différenciation et leur croissance, comme cela est décrit dans l'article « Effect of low-magnitude, high-frequency vibration on ostéogénie différentiation of rat mesenchymal stromal cells » J Orthop Res. 2011 July; 29(7) : 1075-1080. Grâce à la présente invention, on peut appliquer des vibrations localisées à des différents tissus biologiques au sein d'une même culture. Par exemple, on peut instrumenter une boîte de Pétri avec des actionneurs et ainsi développer des tissus biologiques complexes.

**Revendications**

1. Procédé de restitution d'une sensation de texture au moyen d'une interface tactile comportant une surface, au moins un actionneur apte à mettre en vibration ladite surface, et une unité de commande, **caractérisé en ce que**

   l'unité de commande (UC) est configurée pour générer un signal de pilotage (s$_i$) dudit au moins un actionneur (ai) sous forme d'un signal harmonique comportant un signal porteur à une fréquence non radiative pour l'actionneur, l'actionneur couvrant une zone de la surface ;
   une fréquence non radiative pour un actionneur étant une fréquence générant des interférences destructrices des ondes vibratoires sur l'ensemble du pourtour de l'actionneur, de sorte que lorsque l'actionneur est excité par le signal de pilotage, l'amplitude des vibrations générées par l'actionneur en dehors de la zone couverte par l'actionneur est inférieure à l'amplitude des vibrations générées par l'actionneur dans la zone couverte par l'actionneur (ai) d'au moins 10dB ;
   et **en ce que** ledit procédé comporte :

   - à l'aide de l'unité de commande (UC), l'étape de génération dudit signal de pilotage comportant un signal harmonique comprenant un signal porteur à une fréquence non radiative pour l'actionneur,
   - l'étape d'envoi de ce signal de pilotage par l'unité de commande (UC) à l'actionneur de sorte à générer une modification d'un coefficient de friction de la zone de la surface couverte par l'actionneur.

2. Procédé selon la revendication 1 appliqué à une interface comportant plusieurs actionneurs, ledit procédé générant plusieurs signaux de pilotage pour exciter séparément plusieurs actionneurs, lesdits signaux de pilotage comportant chacun un signal harmonique comprenant un signal porteur à une fréquence non radiative et l'envoi de ce signal de pilotage à l'actionneur de sorte à générer une modification d'un coefficient de friction d'une zone de la surface tactile couverte par l'actionneur.

3. Procédé selon la revendication 2, dans lequel tous les signaux de pilotage ont le même signal porteur.

4. Procédé selon la revendication 2 ou 3, dans lequel au moins une partie des signaux de pilotage comportent un signal modulé.

**Patentansprüche**

1. Verfahren zur Wiederherstellung eines Texturempfindens mittels einer taktilen Schnittstelle, die eine Oberfläche, mindestens einen Aktuator, der geeignet ist, die Oberfläche in Schwingung zu versetzen, und eine Steuereinheit umfasst, **dadurch gekennzeichnet, dass**

   die Steuereinheit (UC) so konfiguriert ist, dass sie ein Steuersignal (si) des mindestens einen Aktuators (ai) in Form eines harmonischen Signals erzeugt, das ein Trägersignal mit einer für den Aktuator nicht strahlenden Frequenz umfasst, wobei der Aktuator einen Bereich der Oberfläche abdeckt;
   wobei eine nicht-strahlende Frequenz für einen Aktuator eine Frequenz ist, die destruktive Interferenzen von Schwingungswellen auf dem Gesamtumfang des Aktuators erzeugt, so dass, wenn der Aktuator durch das Steuersignal angeregt wird, die Schwingungsamplitude, die von dem Aktuator außerhalb des von dem Aktuator abgedeckten Bereichs erzeugt wird, um mindestens 10 dB geringer ist als die Schwingungsamplitude, die von dem Aktuator innerhalb des von dem Aktuator (ai) abgedeckten Bereichs erzeugt wird;
und dass das Verfahren Folgendes umfasst:

- mithilfe der Steuereinheit (UC) den Schritt des Erzeugens des Steuersignals, das ein harmonisches Signal umfasst, das ein Trägersignal mit einer für den Aktuator nicht strahlenden Frequenz aufweist,
- den Schritt des Sendens dieses Steuersignals von der Steuereinheit (UC) an den Aktuator, um eine Änderung eines Reibungskoeffizienten des Bereichs der von dem Aktuator abgedeckten Oberfläche zu erzeugen.

2. Verfahren nach Anspruch 1, angewendet auf eine Schnittstelle mit mehreren Aktuatoren, wobei das Verfahren mehrere Steuersignale erzeugt, um mehrere Aktuatoren getrennt anzuregen, wobei die Steuersignale jeweils ein harmonisches Signal umfassen, das ein Trägersignal mit einer nicht strahlenden Frequenz umfasst, und Senden dieses Steuersignals an den Aktuator, um eine Änderung eines Reibungskoeffizienten eines Bereichs der von dem Aktuator abgedeckten taktile Oberfläche zu erzeugen.

3. Verfahren nach Anspruch 1, wobei alle Steuersignale das gleiche Trägersignal haben.

4. Verfahren nach Anspruch 2 oder 3, wobei mindestens ein Teil der Steuersignale ein moduliertes Signal umfasst.

**Claims**

1. A method for reproducing a texture feeling by means of a touch interface including a surface, at least one actuator capable of vibrating said surface, and a control unit, **characterised in that**

the control unit (UC) is configured to generate a drive signal ($s_i$) for driving said at least one actuator (ai) as a harmonic signal including a carrier signal at a non-radiative frequency for the actuator, the actuator covering a zone of the surface;
a non-radiative frequency for an actuator being a frequency generating vibratory waves destroying interference on the whole perimeter of the actuator, so that when the actuator is excited by the drive signal, the amplitude of vibrations generated by the actuator outside the zone covered by the actuator is less than the amplitude of vibrations generated by the actuator in the zone covered by the actuator (ai) by at least 10 dB; and **in that** said method includes:

- using the control unit (UC), the step of generating said drive signal including a harmonic signal comprising a carrier signal at a non-radiative frequency for the actuator,
- the step of sending this drive signal by the control unit (UC) to the actuator so as to generate modification of a friction coefficient of the zone of the surface covered by the actuator.

2. The method according to claim 1 applied to an interface including several actuators, said method generating several drive signals to separately excite several actuators, said drive signals each including a harmonic signal comprising a carrier signal at a non-radiative frequency and sending this drive signal to the actuator so as to generate modification of a friction coefficient of a zone of the touch surface covered by the actuator.

3. The method according to claim 2, wherein all the drive signals have the same carrier signal.

4. The method according to claim 2 or 3, wherein at least part of the drive signals includes a modulated signal.

FIG.1

FIG.2

FIG.3

FIG.4A

FIG.4B

FIG.5

FIG.6

FIG.7

FIG.8

FIG.9A

FIG.9B

FIG.9C

FIG.9D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1956466 A

- EP 2682843 A

**Littérature non-brevet citée dans la description**

- **M. WIERTLEWSKI, ; D. LEONARDIS ; D. J. MEYER ; M. A. PESHKIN ; J. E. COLGATE.** A high-fidelity surface-haptic device for texture rendering on bore finger. *International Conférence on Human Haptic Sensing and Touch Enabled Computer Applications,* 2014, 241-248
- **E. VEZZOLI ; T. SEDNAOUI ; M. AMBERG, ; F. GIRAUD, ; B. LEMAIRE-SEMAIL,.** Texture Rendering Strategies with a High Fidelity Capacitive Visuat-Haptic Friction Control Device. *Eurohaptics 2016,* 2016, vol. 9774

- **MEYER DAVID J. et al.** Dynamics of Ultrasonic and Electrostatic Friction Modulation for Rendering Texture on Haptic Surfaces. *2014 IEEE Haptics Symposium,* 23 Février 2014, 63-67
- Formation of inverse Chladni patterns in liquids at microscale: roles of acoustic radiation and streaming-induced drag forces. *Microfluid Nanofluid,* 2017, vol. 21, 50
- Effect of low-magnitude, high-frequency vibration on ostéogénie différentiation of rat mesenchymal stromal cells. *J Orthop Res.,* Juillet 2011, vol. 29 (7), 1075-1080